# EUROPÄISCHE PATENTSCHRIFT

(11) **EP 3 447 317 B1**
(45) Veröffentlichungstag und Bekanntmachung des Hinweises auf die Patenterteilung: **13.01.2021**
(21) Anmeldenummer: 18189564.0
(22) Anmeldetag: 17.08.2018
(51) Int. Cl.: F16C 9/02, F16C 43/02, F16C 33/14

(54) **LAGERDECKEL SOWIE LAGERANORDNUNG**
BEARING CAP AND BEARING ARRANGEMENT
COUVERCLE DE PALIER ET AGENCEMENT DE PALIER

(30) Priorität: 21.08.2017 DE 102017119058
(43) Veröffentlichungstag der Anmeldung: 27.02.2019
(73) Patentinhaber: Schunk Sintermetalltechnik GmbH, 35452 Heuchelheim (DE)
(72) Erfinder: WENDT, Torsten, 35578 Wetzlar (DE); SCHLEIFSTEIN, Franz-Josef, 57392 Schmallenberg (DE)
(74) Vertreter: Stoffregen, Hans-Herbert

(56) Entgegenhaltungen:
- EP-A2- 0 882 901
- DE-A1-102015 004 022
- US-A- 2 311 434
- US-A1- 2003 131 683

## Beschreibung

Die Erfindung bezieht sich auf einen Lagerdeckel für eine geteilte Lageranordnung umfassend eine erste Durchgangsöffnung, wie Bohrung, und eine zweite Durchgangsöffnung, wie Bohrung, die jeweils eine Spannfläche des Lagerdeckels durchsetzen, wobei die erste Durchgangsöffnung von einem über der Spannfläche vorstehenden ersten Vorsprung und die zweite Durchgangsöffnung von einem über der Spannfläche vorstehenden zweiten Vorsprung umgeben sind, und der erste Vorsprung eine von dem zweiten Vorsprung abweichende Geometrie aufweist. Ferner nimmt die Erfindung Bezug auf eine Lageranordnung.

Entsprechende Lagerdeckel bzw. Lageranordnungen sind zur formschlüssigen Lagesicherung von z.B. Kurbelwellen, Nockenwellen und Pleuellagerungen unterschiedlicher Art bestimmt. Dabei erfolgt zunächst eine Vormontage, bei der die aus Lagerstuhl und Lagerdeckel bestehende Lageranordnung zusammengesetzt wird. Damit bei der Endmontage eine passgenaue Ausrichtung des Lagerdeckels zum Lagerstuhl entsprechend der Vormontage erfolgt, gehen von dem Lagerdeckel Vorsprünge aus, die sich bei der Vormontage in den Lagerstuhl eindrücken. Dabei entsteht durch plastische Verformung eine Materialverdrängung. Hierzu ist der Lagerdeckel aus einem härteren Material, wie Sintermetall, als der Lagerstuhl hergestellt, der aus Aluminium oder einer Aluminiumlegierung bestehen kann.

Bei der Vormontage erfolgt das Einprägen der Vorsprünge in der dem Lagerdeckel gegenüberliegenden Gegenspannfläche des Lagerstuhls dadurch, dass der Lagerdeckel über Schrauben mit dem Lagerstuhl verbunden wird und beim Anziehen der Schrauben die plastische Verformung erfolgt.

Ein Lagerstuhl zuvor beschriebener Art ist der EP 0 897 485 B1 zu entnehmen. Dabei sind ein erster Vorsprung in Draufsicht als ein eine erste Bohrung umgebender Kreisring und ein eine zweite Bohrung umgebender zweiter Vorsprung in Draufsicht als offener Kreisring ausgebildet.

Der EP 0 882 901 A2 ist ein Lagerdeckel mit Vorsprüngen zu entnehmen, die jeweils eine Ringgeometrie mit Abschnitten voneinander abweichender Querschnitte aufweisen.

Auch bei einer Lagerdeckelanordnung nach der WO 2007/081715 A2 sind Bohrungen von Vorsprüngen umgeben, die voneinander abweichende Geometrien aufweisen.

Ein Lagerdeckel nach der WO 2014/078783 A1 weist ringförmige Abschnitte auf, die sich entlang der Umfangsflächen von Bohrungen erstrecken, also diese umgeben.

Eine entsprechende Ausbildung ist auch der WO 2016/030569 A1 zu entnehmen.

Die Japanische Veröffentlichung JP 10238531 A hat eine Lageranordnung zum Gegenstand, bei der die Bohrungen des Lagerdeckels von als trapezförmig bezeichneten Vorsprüngen umgeben sind, die in entsprechend geometrisch angepasste Aussparungen in dem Lagerstuhl eingreifen.

Eine Lageranordnung nach der WO 2013/163410 A1 weist entlang der Bohrungen eines Lagerdeckels verlaufende Vorsprünge auf, die in sich strukturiert sind. Die Vorsprünge verlaufen parallel zueinander und umgeben die Bohrungen nicht.

Um Lagerdeckel und Lagerstuhl positionsgenau einander zuordnen zu können, sieht die DE 10 2013 211 790 A1 Formelemente vor, die unterschiedliche Geometrien aufweisen können.

Nach der WO 2010/022420 A1 weist ein Lagerdeckel über die gesamte Breite und in Bezug auf die aufzunehmende Welle in axialer Richtung verlaufende Vorsprünge auf, die in axialer Richtung einen sich verjüngenden Querschnitt besitzen. Die Vorsprünge besitzen eine gleiche, jeweils entlang einer Geraden verlaufende Geometrie und verlaufen antiparallel.

In der Praxis hat sich herausgestellt, dass in Abhängigkeit von der Form der Vorsprünge und der beim Verbinden entstehenden Verformungen Risse im Lagerstuhl auftreten können.

Durch die unterschiedlichen Geometrien der Vorsprünge kann der Nachteil auftreten, dass zur Materialverdrängung im Lagerstuhl zum Teil erheblich unterschiedliche Kräfte einwirken müssen.

Bei Bohrungen konzentrisch umgebenden Vorsprüngen im Lagerdeckel kann aufgrund vorhandener Toleranzen möglicherweise nicht sichergestellt werden, dass bei der Endmontage der Lagerdeckel die durch die Vormontage vorgegebene Position wieder einnimmt.

Der vorliegenden Erfindung liegt die Aufgabe zugrunde, einen Lagerstuhl und eine Lageranordnung der eingangs genannten Art so weiterzubilden, dass gegebenenfalls vorhandene Toleranzen nicht dazu führen, dass bei der Endmontage eine fehlerhafte Positionierung zwischen Lagerdeckel und Lagerstuhl auftritt.

Nach einem weiteren Aspekt soll sichergestellt sein, dass unabhängig von der Geometrie der Vorsprünge bei der Vormontage gleiche oder ähnliche Kräfte benötigt werden, damit die plastische Verformung derart erfolgt, dass Lagerdeckel und Lagerstuhl in Bezug auf ihren gegenüberliegenden Flächen plan aufeinanderliegen.

Zur Lösung von zumindest einem der Aspekte sieht die Erfindung vor, dass das Volumen des ersten Vorsprungs gleich dem Volumen des zweiten Vorsprungs ist, und dass der erste Vorsprung in Draufsicht eine Kreisringgeometrie und der zweite Vorsprung in Draufsicht eine oval- oder ellipsenförmige Ringgeometrie aufweisen.

Abweichend vom Stand der Technik, bei dem Bohrungen eines Lagerstuhls ganz oder teilweise von Vorsprüngen unterschiedlicher Geometrien umgeben sind, ist erfindungsgemäß vorgesehen, dass das Volumen jedes Vorsprungs gleich ist.

Damit gleiche oder ähnliche Kräfte bei einem plastischen Verformen benötigt werden, ist insbesondere vorgesehen, dass die Vorsprünge im Schnitt eine dreieckförmige Geometrie, insbesondere gleichschenklig dreieckförmige Geometrie, aufweisen, deren Basis von der Spannfläche des Lagerdeckels ausgeht.

Dadurch, dass die Vorsprünge unterschiedliche Geometrien aufweisen, ist sichergestellt, dass ungeachtet etwaiger Toleranzen die Vorsprünge derart in den Lagerstuhl eingeprägt werden, dass bei der Endmontage eine eindeutige Ausrichtung zwischen Lagerstuhl und Lagerdeckel entsprechend der Vormontage erfolgt.

In Weiterbildung der Erfindung ist vorgesehen, dass der erste Vorsprung konzentrisch die erste Durchgangsöffnung umgibt und/oder Mittelpunkt des zweiten Vorsprungs von Längsachse der zweiten Durchgangsöffnung durchsetzt ist.

Ferner besteht die Möglichkeit, dass von der Umfangsfläche von zumindest dem zweiten Vorsprung ausgehend zumindest ein dritter Vorsprung ausgeht oder beabstandet zu dem zweiten Vorsprung verläuft.

Zur weiteren Positionierhilfe sieht eine Weiterbildung der Erfindung vor, dass in diametral zueinander verlaufenden Bereichen der Umfangsfläche zwei dritte Vorsprünge ausgehen.

Die Erfindung zeichnet sich dadurch aus, dass die Höhe H der Vorsprünge 0,95 mm ≤ H ≤ 1,1 mm beträgt, insbesondere H = 1 mm.

In Weiterbildung ist vorgesehen, dass die Außenseite des ersten und/oder zweiten Vorsprungs zur Längsachse der von dem Vorsprung umgebenden Bohrung ein Winkel zwischen 25° und 35°, insbesondere von 30° einschließt.

Ferner ist bevorzugt vorgesehen, dass der erste und/oder zweite Vorsprung in seiner freien Oberfläche von einer insbesondere parallel zur Spannfläche verlaufenden Fläche begrenzt ist.

Erfindungsgemäß wird die Aufgabe auch gelöst durch eine Lageranordnung umfassend einen Lagerdeckel, der eine erste und eine zweite Durchgangsöffnung, wie Bohrung, aufweist, die jeweils eine Spannfläche des Lagerdeckels durchsetzen, wobei die erste Durchgangsöffnung von einem über der Spannfläche vorstehenden ersten Vorsprung und die zweite Durchgangsöffnung von einem über der Spannfläche vorstehenden zweiten Vorsprung umgeben sind und der erste Vorsprung eine von dem zweiten Vorsprung abweichende Geometrie aufweist, sowie ein Gegenlagerelement, wie Lagerstuhl, zum Lagern einer Welle, wobei bei zusammengesetzten Lagerdeckel und Gegenlagerelement in dem Gegenlagerelement eine vierte zu der ersten Durchgangsöffnung verlaufende dritte Öffnung und eine zu der zweiten Durchgangsöffnung verlaufende vierte Öffnung verlaufen, die jeweils eine Gegenspannfläche durchsetzen, und die Spannflächen plan auf den Gegenspannflächen aufliegen und die Vorsprünge in die Gegenspannflächen eingedrückt sind, und die sich dadurch auszeichnet, dass Volumen von durch den ersten Vorsprung in dem Gegenlagerelement verdrängtem Material gleich Volumen von durch den zweiten Vorsprung in dem Gegenlagerelement verdrängtem Material ist, wobei der erste Vorsprung in Draufsicht eine Kreisringgeometrie und der zweite Vorsprung in Draufsicht eine oval- oder ellipsenförmige Ringgeometrie aufweisen.

Der Lagerdeckel selbst kann durch zuvor erläuterte Merkmale charakterisiert sein.

Entsprechend dem Stand der Technik ist vorgesehen, dass der Lagerdeckel aus einem härteren Material, insbesondere Sintermetall, als das Gegenlagerelement besteht, das insbesondere aus Aluminium oder einer Aluminiumlegierung besteht oder dieses bzw. diese enthält.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

### Es zeigen:

- Fig. 1: eine Unteransicht eines Lagerdeckels,
- Fig. 2: ein Detail der Fig. 1,
- Fig. 3: einen Schnitt entlang der Linie III - III in Fig. 2,
- Fig. 4: einen Ausschnitt eines Lagerstuhls in Draufsicht und im Schnitt entlang der Linie V-V,
- Fig. 5: eine Lageranordnung bestehend aus Lagerdeckel und Lagerstuhl,
- Fig. 6: eine perspektivische Darstellung eines Lagerdeckels,
- Fig. 7: Details des Lagerdeckels gemäß Fig. 6 in dessen Füßen,
- Fig. 8: einen Schnitt entlang der Linie A-A in Fig. 6,
- Fig. 9, 10: vergrößerte Darstellungen der Füße des Lagerdeckels gemäß Fig. 6 entlang des Schnitts A-A,
- Fig. 11: einen Schnitt entlang der Linie B-B in Fig. 6 und

Fig. 12 - 14 Draufsichten von Vorsprüngen in den Füßen eines Lagerdeckels. Den Figuren, in denen grundsätzlich gleiche Elemente mit gleichen Bezugszeichen gekennzeichnet sind, sind eine Lageranordnung und Teile dieser zu entnehmen, um eine Welle von z. B. einer Kurbelwellen-, Nockenwellen- oder Pleuellagerung aufzunehmen. Grundsätzlicher Aufbau entsprechender Lageranordnungen sind z. B. der EP 9 882 901 A2, WO 2010/022420 A1 oder EP 0 897 485 B1 zu entnehmen.

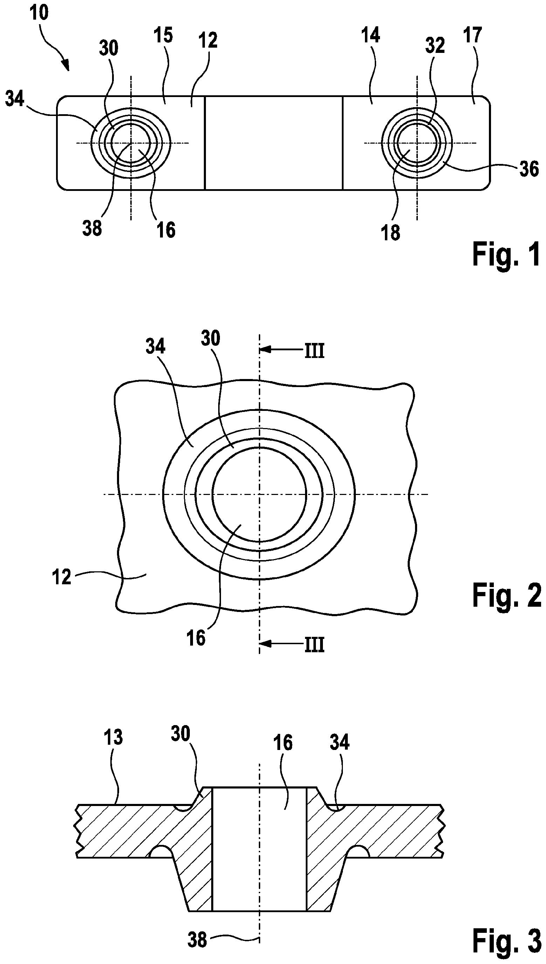

In Fig. 1 ist eine Unteransicht eines Lagerdeckels 10 dargestellt, der entsprechend üblicher Konstruktion zwei zueinander beabstandete Spannflächen 12, 14 aufweist, die jeweils von einer als Bohrung zu bezeichnenden Durchgangsöffnung 16, 18 durchsetzt sind. Die Bohrungen 16, 18 durchsetzen sogenannte Füße 15, die einen Bereich, der im Querschnitt einen Halbkreis bildet, begrenzen, und an dem sich eine nicht dargestellte Welle abstützt.

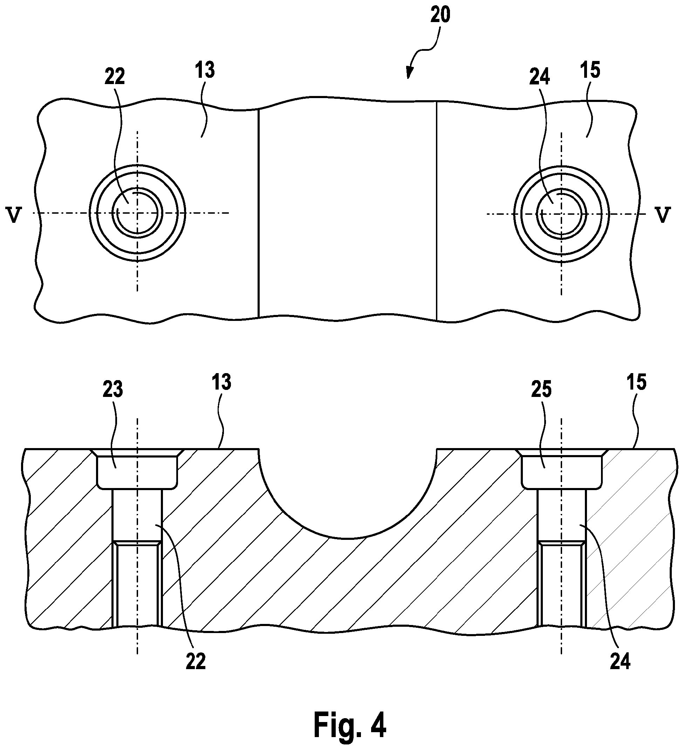

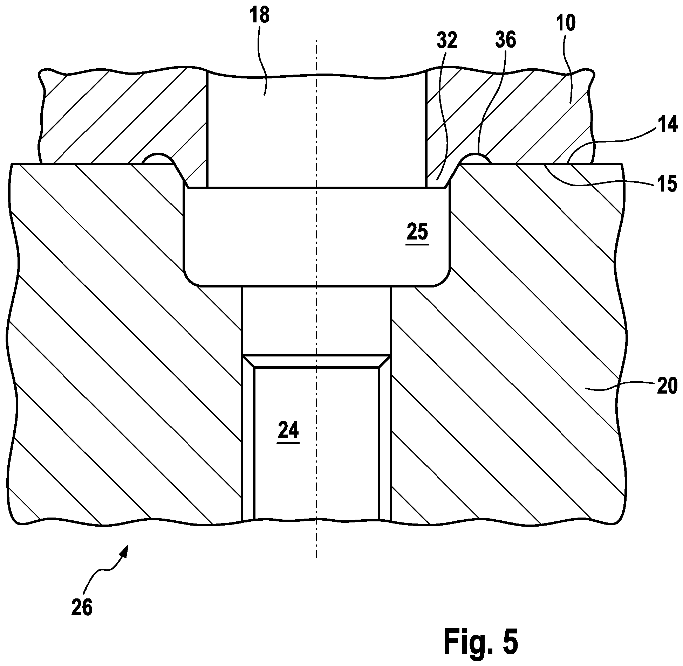

Zur Lagerung der Welle wird der Lagerdeckel 10 mit einem Lagerstuhl 20 verbunden, von dem Ausschnitte den Fig. 4 und 5 zu entnehmen sind.

Zur Lagerung der Wellen ist zuvor eine Vormontage erforderlich, bei der der Lagerdeckel 10 und der Lagerstuhl 20 zusammengesetzt werden. Hierzu weist der Lagerstuhl 20 Sacklöcher oder Durchgangsbohrungen 22, 24 auf, die bei zusammengesetzter Lageranordnung 26 fluchtend zu den Bohrungen 16, 18 verlaufen, wie der Fig. 5 zu entnehmen ist. Sackbohrungen sind dann vorhanden, wenn in diesen ein Innengewinde vorhanden ist, in die die Bohrungen 16, 18 durchsetzende Schrauben eindrehbar sind, um den Lagerdeckel anzuziehen. Durchgangsbohrungen werden dann benutzt, wenn entsprechende Schrauben mittels Muttern festgezogen werden sollen. Insoweit wird jedoch gleichfalls auf hinlänglich bekannte Konstruktionen verwiesen.

Damit der Lagerdeckel 10 bei der Endmontage die gleiche Position wie bei der Vormontage einnimmt, gehen von dem Lagerdeckel 10 als Vorsprünge ausgebildete Positionierhilfen aus. Diese stehen über der jeweiligen Spannfläche 12, 14 der Füße 15, 17 vor. Bei Zusammensetzen von Lagerdeckel 10 und Lagerstuhl 20 und Anziehen der Schrauben erfolgt ein plastisches Verformen in der jeweils zugeordneten Gegenspannfläche 13, 15 des Lagerstuhls 20.

Um die durch plastische Verformung entstehende Materialverdrängung zu ermöglichen, besteht der Lagerdeckel 10 aus einem härteren Material als der Lagerstuhl 20 zumindest in dem Bereich, in dem eine plastische Verformung erfolgen soll. Insbesondere bestehen der Lagerdeckel 10 aus Sintermetall und der Lagerstuhl 20 aus Aluminium oder einer Aluminiumlegierung oder enthält Aluminium bzw. eine Aluminiumlegierung. Andere geeignete Materialien kommen gleichfalls in Frage. Insoweit wird gleichfalls auf den Stand der Technik verwiesen.

Um eine eindeutige Repositionierung, also eine der Vormontage entsprechende Positionierung bei der Endmontage sicherzustellen, ist erfindungsgemäß vorgesehen, dass im Ausführungsbeispiel der Fig. 1 - 3, die Bohrung 16 von einem in Draufsicht oval- oder ellipsenförmigen Vorsprung 30 und die Bohrung 18 in Draufsicht von einem diese konzentrisch umgebenden einen Kreisring bildenden Vorsprung 32 umgeben sind. Dabei sind die Vorsprünge 30, 32 derart ausgebildet, dass diese gleiches Volumen aufweisen, so dass das verdrängte Volumen des Materials in dem Gegenspannflächenbereich jeweils gleich ist und bei gleicher oder ähnlicher Querschnittsgeometrie gleiche oder in etwa gleiche Kräfte auf jeder Seite des Lagerdeckels 12 auf diesen einwirken müssen, damit die Spannflächen 12, 14 plan auf den Gegenspannflächen 13, 15 aufliegen.

Die Vorsprünge 30, 32 umgeben die Bohrungen 16, 18 umlaufend peripher.

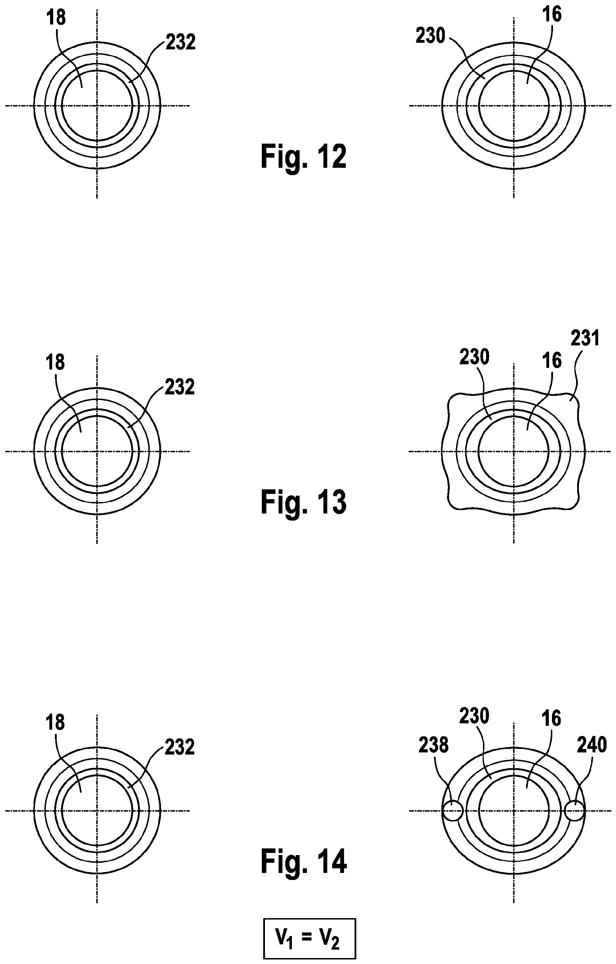

Unabhängig hiervon sollten die Querschnitte der Vorsprünge 30, 32 ähnlich sein, wie sich aus den Fig. 12 - 14 ergibt.

Aus den Darstellungen der Fig. 1 - 3 ergibt sich, dass die Vorsprünge 30, 32 herstellungsbedingt von Senken oder Vertiefungen 34, 36 umgeben sind. Die Vorsprünge 30, 32 werden werkzeugfallend hergestellt, so dass eine mechanische Nachbearbeitung nicht erforderlich ist.

Durch die umfangsseitig eine ellipsenförmige oder Ovalgeometrie aufweisende Erhebung des Vorsprungs 30 ist des Weiteren sichergestellt, dass eine eindeutige Repositionierung erfolgen kann. Auch ist bei vorhandenen Toleranzen sichergestellt, dass der Vorsprung 30 derart in die Gegenspannfläche 13 geprägt ist, dass eine eindeutige Ausrichtung erfolgt, eine Möglichkeit, die bei Vorsprüngen, die jeweils eine Ringgeometrie aufweisen, die konzentrisch eine Bohrung umgeben, nicht zwingend sichergestellt ist.

Des Weiteren sollte der Vorsprung 30 derart ausgebildet sein, dass dessen Mittelpunkt von der Längsachse 38 der Bohrung 16 durchsetzt ist. Entsprechend liegt der Mittelpunkt des Vorsprungs 32 auf der Längsachse der Bohrung 18.

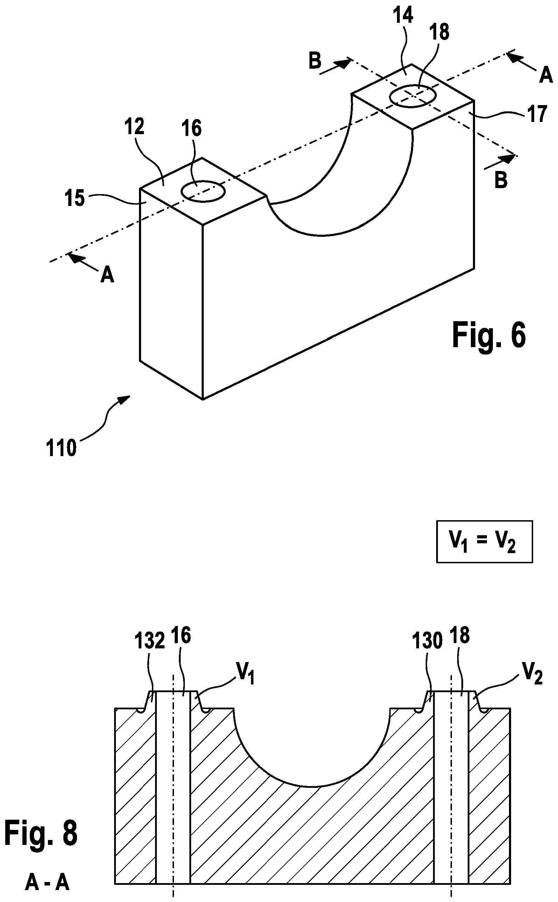

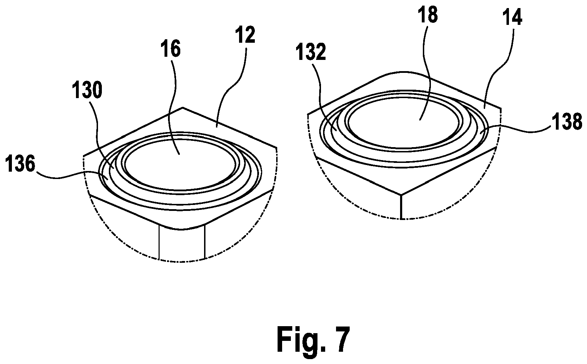

In Fig. 6 ist noch einmal ein Lagerdeckel 110 in perspektivischer Darstellung wiedergegeben, der den Fig. 1 und 3 prinzipiell entspricht. Man erkennt die Füße 15, 17, die im Schnitt eine halbkreisförmige Aussparung begrenzen, in der eine Welle gelagert wird. Die die Füße 15, 17 von den Spannflächen 12, 14 ausgehend durchsetzenden Bohrungen 16, 18 und die diese wiederum peripher umgebenden Vorsprünge sind in der Fig. 6 nicht detailliert dargestellt, ergeben sich vielmehr aus den Fig. 7 - 11.

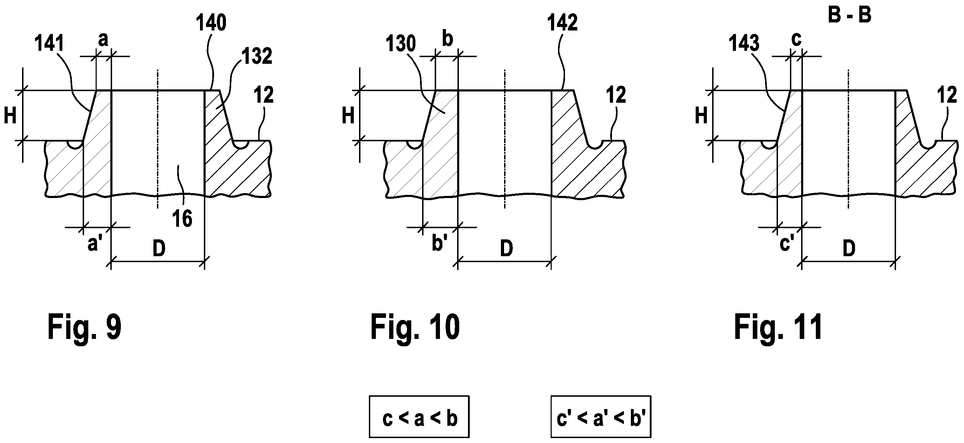

Fig. 8 stellt einen Längsschnitt entlang der Linie A des Lagerstuhls 110 dar. Man erkennt die Bohrungen 16, 18 und diese peripher umgebenden Vorsprünge 130, 132, die entsprechend der erfindungsgemäßen Lehre ein gleiches Volumen aufweisen. Im Ausführungsbeispiel der Fig. 6 - 11 wird die Bohrung 16 in Draufsicht von einem eine Kreisringgeometrie aufweisenden Vorsprung 132 und die Bohrung 18 von einem in Draufsicht eine Ovalgeometrie aufweisenden Vorsprung 130 umgeben. Ungeachtet der unterschiedlichen Geometrien sind die Vorsprünge 130, 132 derart geformt, dass diese gleiche Volumina aufweisen, also V₁ des Vorsprungs 132 ist gleich dem Volumen V₂ des Vorsprungs 130. Die gleichen Volumina ergeben sich aufgrund der unterschiedlichen Wandstärken der Vorsprünge 130, 132 wie prinzipiell durch die Fig. 9 - 11 verdeutlicht wird. So weist der in Draufsicht eine Kreisringgeometrie aufweisende Vorsprung 132 in seiner freien, einen Sattel bildenden Kopffläche 140 eine Breite a und im Fußbereich, also in der Ebene der Spannfläche 12 eine Breite a' auf.

Demgegenüber variiert die Wandstärke des in Draufsicht eine Ovalgeometrie aufweisenden Vorsprungs 130 entsprechend der Schnittdarstellungen in den Fig. 10 und 11. Die sattelförmig verlaufende Kopffläche 142 weist im Schnitt A-A eine Breite b und im Schnitt B-B eine Breite c auf. In der Schnittebene mit der Spannfläche 12 beträgt die Breite b' bzw. c'.

Um die gleichen Volumina V₁ und V₂ zu erzielen, müssen die Beziehungen gelten c < a < b bzw. c' < a' < b'.

Details der die Bohrungen 16, 18 umgebenden Vorsprünge ergeben sich auch aus der Fig. 7. Dabei erkennt man insbesondere, dass jeder Vorsprung 130, 132 von einer Senke 136, 138 umgeben ist, wie im Zusammenhang mit den Fig. 1 - 3 erläutern worden ist.

Zu der Dimensionierung ist Folgendes anzumerken.

Die Höhe H der Vorsprünge 130, 132 sollte im Bereich von 1 mm liegen. Der eine Kreisgeometrie aufweisende Vorsprung 132 sollte in seiner freien Kopffläche, also im Sattel 140 eine Breite a von in etwa 0,7 mm aufweisen. Die Breite a' sollte im Bereich zwischen 0,12 mm und 1,30 mm liegen. Den Neigungswinkel des Seitenschenkels 141 zur Längsachse der Bohrung 16 sollte in etwa 30° betragen.

Der Vorsprung 130, der erwähntermaßen in Draufsicht eine Ovalgeometrie aufweist, sollte in seiner Kopffläche, also im Sattel 142 im Schnitt A-A eine Breite b von in etwa 0,95 mm bis 1,00 mm und im Fußbereich, also an der Schnittfläche mit der Spannfläche 12 eine Breite b' von etwa 1,50 mm bis 1,60 mm aufweisen.

Demgegenüber beträgt die Breite c im Schnitt B-B in der Oberfläche in etwa 0,45 mm bis 0,50 mm und im Fußbereich 1,00 mm ≤ c' ≤ 1,1 mm. Der Außen- oder Seitenschenkel 143 sollte gleichfalls in etwa 30° betragen.

In den Fig. 12 - 14 sind Draufsichten von Vorsprüngen prinzipiell dargestellt, die die Bohrungen 16, 18 in den Füßen 15, 17 des Lagerdeckels 10 bzw. 110 umgeben. Dabei ist jeweils eine der Bohrungen von einem in Draufsicht eine Kreisringgeometrie aufweisenden Vorsprung 232 und der die Bohrung 16 des Fußes 15 umgebende Vorsprung entsprechend der Fig. 8 in Draufsicht ovalförmig (230).

In Fig. 13 ist gleichfalls die Bohrung 16 von einem in Draufsicht eine ovalförmige Geometrie aufweisenden Vorsprung 230 umgeben, wobei in den Ecken der Seitenfläche Erhebungen ausgebildet sind, von denen eine das Bezugszeichen 231 aufweist. Ungeachtet dessen ist das Volumen des Vorsprungs 230, der die Ecken 231 einschließt, gleich dem des Vorsprungs 232.

Nach dem Ausführungsbeispiel der Fig. 14 können dem in Draufsicht ovalförmigen Vorsprung 230 weitere Erhebungen 238, 240 als Positionierhilfen zugeordnet sein, die beabstandet zu dem Vorsprung 230 verlaufen oder in diesen übergehen können. In der Darstellung gehen die Erhebungen 238, 240 von der Außenfläche des Vorsprungs 230 aus.

In der Fig. 5 ist ein Ausschnitt einer Lageranordnung dargestellt. Dabei sind in Fig. 5 Lagerdeckel 10 und Lagerstuhl 20 zusammengesetzt. In Fig. 4 ist ein Ausschnitt des Lagerstuhls 20 in Draufsicht sowie in Schnittdarstellung entlang der Linie V-V in der oberen Darstellung wiedergegeben.

Wie sich aus der Fig. 4 ergibt, weist die Bohrung 22, 24 gegenspannflächenseitig eine Erweiterung 23, 25 auf, ohne dass dies zwingend erforderlich ist.

Aus der Fig. 5 wird ersichtlich, dass eine Materialverdrängung auch im Randbereich der Erweiterung 23, 25 erfolgt. Ferner dringt Material in die den jeweiligen Vorsprung 30,32 umgebende Senke 34, 36 ein, wie dies auch in Fig. 5 verdeutlicht ist.

Anzumerken ist ferner, dass die Vorsprünge 30, 32 durchgangsöffnungsseitig in die Innenflächen der Bohrungen 16, 18 bündig übergehen können.

## Patentansprüche

1. Lagerdeckel (10, 110) für eine geteilte Lageranordnung (26) umfassend eine erste Durchgangsöffnung (16), wie Bohrung, und eine zweite Durchgangsöffnung (18), wie Bohrung, die jeweils eine zueinander beabstandete Spannfläche (12, 14) des Lagerdeckels durchsetzen, wobei die erste Durchgangsöffnung von einem über der Spannfläche vorstehenden ersten Vorsprung (32, 132, 232) und die zweite Durchgangsöffnung von einem über der Spannfläche vorstehenden zweiten Vorsprung (30, 130, 230) umgeben sind, und der erste Vorsprung eine von dem zweiten Vorsprung abweichende Geometrie aufweist,
**dadurch gekennzeichnet,**
**dass** Volumen (V₁) des ersten Vorsprungs (32) gleich dem Volumen (V₂) des zweiten Vorsprungs (30) ist, und dass der erste Vorsprung (32) in Draufsicht eine Kreisringgeometrie und der zweite Vorsprung (30) in Draufsicht eine oval- oder ellipsenförmige Ringgeometrie aufweisen.

2. Lagerdeckel nach Anspruch 1,
**dadurch gekennzeichnet,**
**dass** der erste Vorsprung (32, 132) konzentrisch die erste Durchgangsöffnung (18) umgibt und/oder Mittelpunkt des zweiten Vorsprungs (30, 130, 230) von Längsachse (38) der zweiten Durchgangsöffnung (16) durchsetzt ist.

3. Lagerdeckel nach Anspruch 1 oder 2,
**dadurch gekennzeichnet,**
**dass** von Umfangsfläche von zumindest dem zweiten Vorsprung (30, 130, 230) zumindest ein dritter Vorsprung (231, 238, 240) ausgeht oder benachbart zu dem zweiten Vorsprung verläuft.

4. Lagerdeckel nach Anspruch 3,
**dadurch gekennzeichnet,**
**dass** in diametral zueinander verlaufenden Bereichen der Umfangsfläche zwei dritte Vorsprünge ausgehen.

5. Lagerdeckel nach zumindest einem der vorhergehenden Ansprüche,
**dadurch gekennzeichnet,**
**dass** Höhe H der Vorsprünge (30, 32, 130, 132, 230, 232) beträgt 0,95 mm ≤ H ≤ 1,1 mm, insbesondere H = 1 mm.

6. Lagerdeckel nach zumindest einem der vorhergehenden Ansprüche,
**dadurch gekennzeichnet,**
**dass** Außenseite (141, 143) des ersten und/oder zweiten Vorsprungs (30, 130, 230; 32, 132, 232) zur Längsachse der von dem Vorsprung umgebenen Bohrung (16, 18) einen Winkel zwischen 25° und 35°, insbesondere von 30° einschließt.

7. Lagerdeckel nach zumindest einem der vorhergehenden Ansprüche,
**dadurch gekennzeichnet,**
**dass** der erste und/oder zweite Vorsprung (30, 130, 230; 32, 132, 232) in seiner freien Oberfläche von einer insbesondere parallel zur Spannfläche (12) verlaufenden Fläche (140, 142) begrenzt ist.

8. Lageranordnung (26) umfassend einen Lagerdeckel (10, 110), nach Anspruch 1, der eine erste und eine zweite Durchgangsöffnung (16, 18), wie Bohrung, aufweist, die jeweils eine Spannfläche (12, 14) des Lagerdeckels durchsetzen, wobei die erste Durchgangsöffnung von einem über der Spannfläche vorstehenden ersten Vorsprung (32, 132) und die zweite Durchgangsöffnung von einem über der Spannfläche vorstehenden zweiten Vorsprung (30, 130, 230) umgeben sind und der erste Vorsprung eine von dem zweiten Vorsprung abweichende Geometrie aufweist, sowie ein Gegenlagerelement (20), wie Lagerstuhl, zum Lagern einer Welle, wobei bei zusammengesetzten Lagerdeckel und Gegenlagerelement in dem Gegenlagerelement fluchtend eine zu der ersten Durchgangsöffnung verlaufende dritte Öffnung (24) und fluchtend eine zu der zweiten Durchgangsöffnung verlaufende vierte Öffnung (22) verlaufen, die jeweils eine Gegenspannfläche (13, 15) durchsetzen, und wobei die Spannflächen plan auf den Gegenspannflächen aufliegen und die Vorsprünge in die Gegenspannflächen eingedrückt sind,
**dadurch gekennzeichnet,**
**dass** Volumen (V₁) von durch den ersten Vorsprung (32, 132) in dem Gegenlagerelement (20) verdrängtem Material gleich Volumen (V₂) von durch den zweiten Vorsprung (30, 130, 230) in dem Gegenlagerelement verdrängtem Material ist, wobei der erste Vorsprung (32) in Draufsicht eine Kreisringgeometrie und der zweite Vorsprung (30) in Draufsicht eine oval- oder ellipsenförmige Ringgeometrie aufweisen.

9. Lageranordnung (26) nach Anspruch 8 mit dem Lagerdeckel (10) nach zumindest einem der Ansprüche 2 bis 7.

10. Lageranordnung nach zumindest Anspruch 8 oder 9,
**dadurch gekennzeichnet,**
**dass** der Lagerdeckel (10) aus einem härteren Material, insbesondere Sintermetall, als das Gegenlagerelement besteht, das insbesondere aus Aluminium oder einer Aluminiumlegierung besteht oder dieses bzw. diese enthält.

## Claims

1. Bearing cap (10, 110) for a split bearing arrangement (26) comprising a first passage opening (16) such as a drilled hole and a second passage opening (18) such as a drilled hole which pass through bearing cap clamping surfaces (12, 14) at a distance from one another respectively, the first passage opening being surrounded by a first projection (32, 132, 232) protruding above the clamping surface and the second passage opening by a second projection (30, 130, 230) protruding above the clamping surface, and the first projection having a geometry diverging from the second projection,
wherein
the volume (V₁) of the first projection (32) is equal to the volume (V₂) of the second projection (30), and the first projection (32) has in the plan view a circular ring geometry and the second projection (30) has in the plan view an oval or elliptical ring geometry.

2. Bearing cap according to claim 1,
wherein
the first projection (32, 132) concentrically surrounds the first passage opening (18) and/or the center point of the second projection (30, 130, 230) is passed through by the longitudinal axis (38) of the second passage opening (16).

3. Bearing cap according to claim 1 or 2,
wherein
at least one third projection (231, 238, 240) extends from the circumferential surface of at least the second projection (30, 130, 230) or is adjacent to the second projection.

4. Bearing cap according to claim 3,
wherein
two third projections extend in areas of the circumferential surface that are diametrical to one another.

5. Bearing cap according to at least one of the preceding claims,
wherein
the height H of the projections (30, 32, 130, 132, 230, 232) is 0.95 mm ≤ H ≤ 1.1 mm, in particular H = 1 mm.

6. Bearing cap according to at least one of the preceding claims,
wherein
the outside (141, 143) of the first and/or second projection (30, 130, 230; 32, 132, 232) forms an angle between 25° and 35°, in particular 30°, relative to the longitudinal axis of the drilled hole (16, 18) surrounded by the projection.

7. Bearing cap according to at least one of the preceding claims,
wherein
the first and/or second projection (30, 130,230; 32, 132,232) is limited in its free surface by a surface (140, 142) which is in particular parallel to the clamping surface (12).

8. Bearing arrangement (26) comprising a bearing cap (10, 110) according to claim 1, having a first and a second passage opening (16, 18) such as a drilled hole which pass through a bearing cap clamping surface (12, 14) respectively, the first passage opening being surrounded by a first projection (32, 132) protruding above the clamping surface and the second passage opening by a second projection (30, 130, 230) protruding above the clamping surface, and the first projection having a geometry diverging from the second projection, and a counter-bearing element (20) such as a bearing bracket for mounting of a shaft, where, when the bearing cap and counter-bearing element are put together, a third opening (24) aligned with the first passage opening and a fourth opening (22) aligned with the second passage opening extend inside the counter-bearing element and pass through a counter-clamping surface (13, 15) respectively, and the clamping surfaces being in flat contact with the counter-clamping surfaces and the projections being pressed into the counter-clamping surfaces.
wherein
the volume (V₁) of material in the counter-bearing element (20) displaced by the first projection (32, 132) is equal to the volume (V₂) of material in the counter-bearing element displaced by the second projection (30, 130, 230), the first projection (32) having in the plan view a circular ring geometry and the second projection (30) having in the plan view an oval or elliptical ring geometry.

9. Bearing arrangement (26) according to claim 8 with the bearing cap (10) according to at least one of claims 2 to 7.

10. Bearing arrangement according to at least claim 8 or 9,
wherein
the bearing cap (10) consists of a harder material, in particular sintered metal, than the counter-bearing element, which in particular consists of or contains aluminium or an aluminium alloy.

## Revendications

1. Couvercle de palier (10, 110) pour un agencement de palier (26) divisé comprenant un premier orifice de passage (16), tel un alésage, et un second orifice de passage (18), tel un alésage, qui traversent chacun une surface de serrage écartée l'une de l'autre (12, 14) du couvercle de palier, sachant que le premier orifice de passage est entouré d'une première saillie (32, 132, 232) dépassant de la surface de serrage et que le second orifice de passage est entouré d'une deuxième saillie (30, 130, 230) dépassant de la surface de serrage, et que la première saillie présente une géométrie différant de la deuxième saillie,
**caractérisé en ce**
**que** le volume (V₁) de la première saillie (32) est identique au volume (V₂) de la deuxième saillie (30), et que la première saillie (32) présente en vue de dessus une géométrie en forme d'anneau circulaire et que la deuxième saillie (30) présente en vue de dessus une géométrie de forme ovale ou elliptique.

2. Couvercle de palier selon la revendication 1,
**caractérisé en ce**
**que** la première saillie (32, 132) entoure le premier orifice de passage (18) de manière concentrique et/ou que le centre de la deuxième saillie (30, 130, 230) est traversé par l'axe longitudinal (38) du second orifice de passage (16).

3. Couvercle de palier selon la revendication 1 ou 2,
**caractérisé en ce**
**qu'**au moins une troisième saillie (231, 238, 240) part de la surface circonférentielle de ladite au moins une deuxième saillie (30, 130, 230) ou avoisine la deuxième saillie.

4. Couvercle de palier selon la revendication 3,
**caractérisé en ce**
**que** partent deux troisièmes saillies dans des zones de la surface circonférentielle, s'étendant diamétralement l'une vers l'autre.

5. Couvercle de palier selon au moins une des revendications précédentes,
**caractérisé en ce**
**que** la hauteur H des saillies (30, 32, 130, 132, 230, 232) est telle que 0,95 mm ≤ H ≤ 1,1 mm, notamment H = 1 mm.

6. Couvercle de palier selon au moins une des revendications précédentes,
**caractérisé en ce**
**que** le côté extérieur (141, 143) de la première et/ou deuxième saillie (30, 130, 230 ; 32, 132, 232) forme un angle compris entre 25° et 35°, notamment de 30°, par rapport à l'axe longitudinal de l'alésage (16, 18) entourant la saillie.

7. Couvercle de palier selon au moins une des revendications précédentes,
**caractérisé en ce**
**que** la première et/ou deuxième saillie (30, 130, 230; 32, 132, 232) est délimitée, dans sa surface libre, par une surface (140, 142) s'étendant notamment parallèlement à la surface de serrage (12).

8. Agencement de palier (26) comprenant un couvercle de palier (10, 110), selon la revendication 1, qui présente un premier et un second orifice de passage (16, 18) tel un alésage, qui traversent chacun une surface de serrage (12, 14) du couvercle de palier, sachant que le premier orifice de passage est entouré d'une première saillie (32, 132) dépassant de la surface de serrage et que le second orifice de passage est entouré d'une deuxième saillie (30, 130, 230) dépassant de la surface de serrage, et que la première saillie présente une géométrie différant de la deuxième saillie, ainsi qu'un élément de contre-palier (20), tel qu'un palier de butée, destiné à supporter un arbre, sachant que, lors de l'assemblage du couvercle de palier et de l'élément de contre-palier, s'étendent alignés un troisième orifice (24) s'étendant en direction du premier orifice de passage et un quatrième orifice (22) s'étendant en direction du second orifice de passage dans l'élément de contre-palier, qui traversent respectivement une surface de contre-serrage (13, 15), et sachant que les surfaces de serrage reposent à plat sur les surfaces de contre-serrage et que les saillies sont enfoncées dans les surfaces de contre-serrage.
**caractérisé en ce**
**que** le volume (V₁) du matériau repoussé par la première saillie (32, 132) dans l'élément de contre-palier (20) est identique au volume (V₂) du matériau repoussé par la deuxième saillie (30, 130, 230) dans l'élément de contre-palier, sachant que la première saillie (32) présente, en vue de dessus, une géométrie en forme d'anneau circulaire et que la deuxième saillie (30) présente en vue de dessus une géométrie de forme ovale ou elliptique.

9. Agencement de palier (26) selon la revendication 8 avec le couvercle de palier (10) selon au moins une des revendications 2 à 7.

10. Couvercle de palier selon au moins la revendication 8 ou 9,
**caractérisé en ce**
**que** le couvercle de palier (10) est constitué d'un matériau plus dur que l'élément de contre-palier, notamment de métal fritté, qui est constitué notamment d'aluminium ou d'un alliage en aluminium ou contient ce premier matériau ou ces deux matériaux.
